# EUROPÄISCHE PATENTSCHRIFT

(11) **EP 2 597 321 B1**
(45) Veröffentlichungstag und Bekanntmachung des Hinweises auf die Patenterteilung: **29.08.2018**
(21) Anmeldenummer: 12007843.1
(22) Anmeldetag: 21.11.2012
(51) Int. Cl.: F16B 7/04, F16B 7/22, F21V 17/10, F21S 4/00

(54) **Anordnung mit zwei Leisten und einem magnetisch lösbarem Verriegelungsmechanismus**
Device with two bars and a magnetically decoupling locking mecanism
Dispositif avec deux profilés et un mécanisme de verrouillage qui peut être découplé magnétiquement

(30) Priorität: 24.11.2011 DE 102011119272
(43) Veröffentlichungstag der Anmeldung: 29.05.2013
(73) Patentinhaber: Tennagels, Thomas, 40627 Düsseldorf (DE)
(72) Erfinder: Tennagels, Thomas, 40627 Düsseldorf (DE)
(74) Vertreter: Cohausz Hannig Borkowski Wißgott

(56) Entgegenhaltungen:
- DE-A1-102006 057 214
- DE-U1- 20 315 952
- US-A1- 2005 186 027

## Beschreibung

Die Erfindung betrifft einen magnetischen Entkupplungsmechanismus für aneinander zu reihende leistenförmige Profile, umfassend eine erste aus einem Profil gebildete Leiste und eine zweite aus einem Profil gebildete Leiste, wobei die erste und die zweite Leiste mittels eines Formschlusses miteinander lösbar verbindbar sind.

In vielen Bereichen ist es erforderlich, leistenförmige Profile aneinander zu reihen, um auf diese Art ein einziges, verlängertes Profil, d.h. eine einzige Leiste zu erhalten. Die Profile werden jeweils an ihren axialen Enden stirnseitig aneinander gesetzt. Dabei ist es bekannt, die Profile miteinander untrennbar zu verbinden, z.B. durch Verkleben oder lösbar zu verbinden, beispielsweise zu verschrauben. Es ist jedoch auch bekannt, die Profile kraftschlüssig mittels Presspassung zu verbinden, wobei ein von dem einen Profil abstehendes Element in eine Aufnahme des anderen Profils kraftschlüssig eingepresst wird. Auch bekannt ist es, mittels Formschluss zwischen einem rastenden Element des einen Profils und einer das rastende Element aufnehmenden Ausformung des anderen Profils diese Profile fest zu verriegeln.

Ein Beispiel einer derartigen Verriegelung offenbart die DE 203 15 952 U1. Hier erstreckt sich aus einer ersten Leiste eine Mehrzahl von Stangen, die in einem gedachten Punkt auf der Mittelachse dieser Leiste zusammengeführt und verschweißt sind. Eine zweite Leiste weist eine federnd gelagerte Wippe auf, die an einem Ende eine Klinke besitzt, welche die Stangen an dem genannten Punkt umgreift. Am anderen Ende der Wippe ist ein Hebel angeordnet, der durch eine Öffnung in der zweiten Leiste manuell heruntergedrückt werden kann, so dass sich die Klinke aus dem Formschluss löst und die Stangen der ersten Leiste freigibt.

Die US 2005/0186027 A1 beschreibt einen Verschluss für einen Rucksack oder eine Tasche, die mit einem magnetischen Schlüssel gelöst werden kann. Der Verschluss umfasst einen männlichen Einsatzteil und einen weiblichen Aufnahmeteil, wobei der Aufnahmeteil zumindest zwei federnd gelagerte Verriegelungspins und eine Vertiefung zur Aufnahme des Schlüssels, und der Einsatzteil Verriegelungslöcher zur einschnappenden Aufnahme der Verriegelungspins aufweist. In dem Schlüssel befinden sich Permanentmagnete an denjenigen Stellen, die den Positionen der Verriegelungspins entsprechen und die im in der Aufnahme des Aufnahmeteils einliegenden Zustand des Schlüssels die Verriegelungspins aus den Verriegelungslöchern ziehen, so dass der Einsatzteil und der Aufnahmeteil voneinander getrennt werden können.

Ein besonderer Anwendungsbereich sind Lichtleisten, die zwischen 10 cm und 300 cm lang sind und in dem Profil in regelmäßigem Abstand zu einander Beleuchtungseinheiten, insbesondere Leuchtdioden, enthalten. Neben der mechanischen Schnittstelle zwischen zwei Lichtleisten respektive deren Profilen, ist dann zusätzlich eine elektrische Schnittstelle nötig, um die Beleuchtungseinheiten der nachfolgenden Leiste oder Leisten zu bestromen.

LED-Lichtleisten gewinnen insbesondere für Anwendungen in der Werbung und bei Veranstaltungen wie Messen oder Konzerten zunehmend an Beachtung. Dabei werden die Lichtleisten nicht lediglich an einander gereiht, um die gewünschte Länge zu erhalten, sondern zusätzlich mehrere Lichtleisten nebeneinander angeordnet, so dass ein Banner, ein Vorhang oder eine sonstige Leuchtfläche, z.B. über einem Messestand oder auf einer Bühne entsteht, die ein Videodarstellung auf der so entstehenden Gesamtstruktur von LED-Lichtleisten ermöglicht. Da jede Beleuchtungseinheit einzeln angesteuert werden kann, sind mit derartigen Bannern oder Vorhängen große Werbungs- und Informationsträger bildbar, die Buchstaben, Worte oder Symbole anzeigen oder einfach nur beeindruckende Lichteffekte erzeugen können.

Für zeitweise stattfindende Veranstaltungen wie Messen oder Konzerte müssen die Lichtleisten zusammen- und wieder auseinandergebaut werden, wobei es aus Sicherheitsgründen von besonderer Wichtigkeit ist, dass die Lichtleisten einerseits besonders gut verriegelt sind und sich andererseits auf einfache Weise wieder lösen lassen. Eine dauerhafte Verbindung, beispielsweise ein unlösbarer Formschluss, scheidet daher ebenso aus, wie eine Verschraubung, da ihr Lösen zu zeit- und arbeitsaufwändig ist. Ein Kraftschluss ist ebenfalls zu schwierig zu lösen, sofern er den gebotenen Sicherheitsanforderungen genügen soll.

Es ist daher Aufgabe der vorliegenden Erfindung, eine Verbindungstechnik für leistenförmige Profile, insbesondere für Lichtleisten zu schaffen, die zum Einen eine sichere Verbindung zweier Leisten gewährleistet, andererseits auf einfache und schnelle Art und Weise lösbar ist.

Erfindungsgemäß wird diese Aufgabe mit einer Anordnung nach Anspruch 1 gelöst.

Vorteilhafte Weiterbildungen sind in den Unteransprüchen angegeben.

Erfindungsgemäß wird ein magnetischer Entkupplungsmechanismus für aneinander zu reihende leistenförmige Profile vorgeschlagen, umfassend eine erste aus einem Profil gebildete Leiste und eine zweite aus einem Profil gebildete Leiste, wobei die erste und die zweite Leiste mittels eines Formschlusses miteinander lösbar verbindbar sind und der Formschluss durch ein bewegliches permanentmagnetisches Rastmittel herstellbar ist, dessen Magnetisierung in Richtung seiner Bewegbarkeit liegt, wobei der Formschluss mittels eines externen Entkupplungsmagneten lösbar ist.

Ein besonderer Vorteil dieser Lösung ist, dass der Entkupplungsmechanismus von außen nicht sichtbar ist. Dies hat zum einen ästhetische Vorteile, weil die Leisten an ihren Verbindungsstellen abgesehen von der durch die Stirnseiten gebildeten Trennebene ohne optisch erkennbare Verriegelungselemente ineinander übergehen. Zum anderen ist gewährleistet, dass die Leisten nur mit der Spezialkenntnis über den Entkupplungsmechanismus voneinander gelöst werden können. Dies ist ein Sicherheitsmerkmal und ein Diebstahlschutz.

Der magnetische Entkupplungsmechanismus bildet eine Vorrichtung oder ein Leistensystem umfassend die erste und die zweite profilförmige Leiste, die mittels des erfindungsgemäßen Formschlusses miteinander lösbar verbindbar sind. Aufgrund des erfindungsgemäßen Entkupplungsmechanismusses ist es auf einfache Weise möglich, eine Verbindung zweier Leisten durch Formschluss wieder zu lösen und die beiden Leisten voneinander zu trennen. Hierfür kann ein Handelsüblicher Permanentmagnet dienen, der im Bereich des Formschlusses an die entsprechende Leiste zu halten ist. Je nach Ausgestaltung des Formschlusses, d.h. je nachdem in welche Richtung das Rastmittel zur Bildung des Formschlusses einrastet, ist die Polung des Entkupplungsmagneten so zu wählen, das das magnetische Rastmittel von dem Entkupplungsmagneten abgestoßen oder herangezogen wird. Die Verriegelung der beiden Leisten erfolgt nur aufgrund des Formschlusses. Einer kraftschlüssigen Verbindung durch die Magnetkraft des Rastmittels bedarf es nicht. Das Rastmittel selbst sorgt lediglich aufgrund seines Formschlusses mit einem anderen Element des anderen Profils für die Verriegelung der beiden Leisten. Erfindungsgemäß weist die erste Leiste an einem axialen Stirnende ein abstehendes Schwert und die zweite Leiste eine Aufnahme zum Einschieben des Schwerts auf. Das Schwert ist zungenförmig und stabilisiert die Verbindungsstelle zwischen den beiden Leisten, indem es in beide Profile hineinragt.

Bei einer ersten Ausführungsvariante weist das Schwert eine Vertiefung und die zweite Leiste ein Federelement auf, das das Rastmittel trägt, wobei das Rastmittel im in die Aufnahme eingeschobenen Zustand des Schwerts den Formschluss bildend in seiner Vertiefung verriegelnd einliegt. Eine Vertiefung in diesem Sinne ist jede das Rastmittel aufnehmende Form, insbesondere auch eine Ausnehmung, eine Bohrung oder ein Rücksprung.

Ist das Federelement von der Außenseite des Profils der zweiten Leiste betrachtet, hinter dem Schwert angeordnet, muss das Rastmittel aus der Vertiefung herausgedrückt werden. Dies kann durch zum Rastmittel gleichgerichtete Magnetkraft des Entkupplungsmagneten erfolgen, da sich magnetisch gleichgerichtete Pole abstoßen. Ist das Federelement von der Außenseite des Profils der zweiten Leiste betrachtet, vor dem Schwert angeordnet, muss das Rastmittel aus der Vertiefung herausgezogen werden. Dies kann durch zum Rastmittel entgegen gerichtete Magnetkraft des Entkupplungsmagneten erfolgen, da sich magnetisch entgegen gerichtete Pole anziehen. In beiden Fällen wird das Rastmittel entgegen der Rückstellkraft des Federelements bewegt.

Bei einer zweiten Ausführungsvariante trägt das Schwert das Rastmittel und die zweite Leiste weist eine Vertiefung auf, wobei das Rastmittel im in die Aufnahme eingeschobenen Zustand des Schwerts den Formschluss bildend federbelastet in der Vertiefung der zweiten Leiste verriegelnd einliegt. Beispielsweise kann das Rastmittel am Schwert gehalten sein und mit einer Feder von diesem weg gedrückt werden, so dass das Rastmittel federbelastet in die Vertiefung der zweiten Leiste gedrückt werden kann bzw. im zusammengefügten Zustand gedrückt wird. Alternativ kann das Rastmittel ein Teil des Schwerts bilden, wobei das Schwert selbst dann federnd ausgebildet ist.

Nach einer bevorzugten Weiterbildung der ersten Ausführungsvariante kann das Federelement eine Blattfeder sein, die an einem Ende an dem Profil der zweiten Leiste gehalten ist und an ihrem gegenüberliegenden, federnden Ende das Rastmittel trägt. Durch die Blattfeder wird eine besonders flache Bauform für die Realisierung des Formschlusses und damit des Verriegelungsmechanismusses erreicht. Alternativ kann das Federelement auch eine Spiralfeder sein, die an einem axialen Ende das Rastmittel trägt. In diesem Fall ist das Rastmittel jedoch an dem Profil der zweiten Leiste geführt zu halten, so dass es bei entferntem Schwert nicht herausfallen kann.

Wie nachfolgend noch verdeutlicht wird, kann das Rastmittel in einer Öffnung des Profils beweglich einliegen, so dass sich eine Zugkraft des Profils nicht auf die Befestigung der Blattfeder überträgt, sondern vom Profil aufgenommen wird. Für eine robuste und sichere Verbindung ist es erforderlich, dass nur sehr wenig Spiel zwischen dem Rastmittel und der Öffnung vorhanden ist. In dieser Ausführungsvariante kann sich das Rastmittel in der Öffnung verkanten, wenn das Federelement eine einseitig gehaltene Blattfeder ist. Denn in diesem Fall verläuft die Bewegung des Rastmittels entlang eines Bogenabschnitts. Alternativ zu einer Blattfeder kann das Federelement durch einen streifenförmigen Steg gebildet sein, der sich beidseitig federnd an dem Profil abstützt und etwa mittig das Rastmittel trägt. Ein solcher Steg besitzt dann eine weitestgehend lineare Bewegung, so dass es nicht zu einem Verkanten des Rastmittels in der Öffnung kommen kann.

Der Steg kann durch ein dünnes Blech oder Plättchen aus Kunststoff gebildet sein. Seine Längserstreckung kann parallel zum Profil verlaufen. Beispielsweise kann quer zum Profil an den beiden Seiten des Stegs jeweils ein Bügel verlaufen, an denen sich der Steg mittels Federn abstützt.

Bei allen zuvor genannten Varianten kann das Schwert an seiner zur zweiten Leiste gerichteten Vorderseite eine Abschrägung aufweisen, damit es besser in die Aufnahme der anderen Leiste eingeführt werden kann. Bei der ersten Führungsvariante respektive ihrer Weiterbildungen bewirkt die Abschrägung zudem, dass das Rastmittel angehoben wird, auf der Abschrägung entlang gleitet und bei vollständig eingeschobenem Schwert in dessen Vertiefung rastend hineinrutscht. Alternativ oder zusätzlich kann auch das Rastmittel an seiner zur ersten Leiste gerichteten Seite eine Abschrägung aufweisen, so dass es angehoben wird, wenn das Schwert eingeschoben wird.

Vorzugsweise besteht zumindest das Profil der zweiten Leiste aus einem nicht magnetischen Material, beispielsweise aus Aluminium, d.h. einem Material hoher magnetischer Durchlässigkeit ohne das Magnetfeld verstärkende Wirkung, so dass das Magnetfeld des Entkupplungsmagneten frei durch das Profil hindurchtreten und auf das Rastmittel einwirken kann.

Vorzugsweise bestehen auch das Schwert und/ oder das Federelement aus einem nicht magnetischen Material der genannten Art, so dass das Magnetfeld des Entkupplungsmagneten frei durch das Schwert oder das Federelement hindurchtreten und auf das Rastmittel einwirken kann. Beispielsweise können das Schwert und/ oder das Federelement aus Edelstahl oder Messing sein.

Erfindungsgemäß kann das Rastmittel ein Arretierungsbolzen sein, d.h. ein zylindrischer, massiver Körper, wobei der Querschnitt des Zylinders beliebig sein kann, insbesondere rund, oval oder auch rechteckig. Die Vertiefung des Schwerts ist dann bezüglich ihrer Form und Abmessung korrespondierend ausgebildet, so dass der Arretierungsbolzen in dieser formschlüssig einliegen kann.

Die leistenförmige Profil der ersten und der zweiten Leiste besitzt vorzugsweise einen geschlossenen Profilraum, in den das Schwert fest eingesetzt ist und somit gehalten ist. Der geschlossene Profilraum erstreckt sich zumindest entlang eines Teils vorzugsweise entlang der gesamten axialen Länge des Profils. Vorzugsweise entspricht der Innenquerschnitt des Profilraums etwa dem äußeren Querschnitt des Schwerts, so dass das Schwert formschlüssig im Profilraum einliegt, wobei es dort verklebt oder verschraubt sein kann. Alternativ kann es auch kraftschlüssig in den Profilraum eingepresst sein.

Des Weiteren kann auch die Aufnahme des Profils der zweiten Leiste durch einen geschlossenen Profilraum gebildet sein, in den das Schwert einschiebbar ist. Hier sollte jedoch der Innenquerschnitt des Profilraums der zweiten Leiste geringfügig größer sein als der äußere Querschnitt des Schwerts, so dass das Schwert zwar formschlüssig jedoch ohne Kraftaufwand in den Profilraum einschiebbar ist. Es ist von Vorteil, die beiden Profile der ersten und der zweiten Leiste identisch auszubilden, so dass bei der Herstellung der Leisten die axialen Enden der Profile nicht unterschieden werden müssen. Sofern das Fixieren des Schwerts in dem Profil der ersten Leiste durch Kraftschluss erfolgen soll, wäre dann derjenige Teil des Schwerts, der in den geschlossenen Profilraum des Profils der zweiten Leiste einzusetzen ist, im Querschnitt etwas geringer auszubilden, um ein kraftloses Einschieben zu ermöglichen.

Insbesondere können die beiden Profile U-förmig sein. Sie besitzen dadurch in ihrer Länge eine hohe Stabilität hinsichtlich ihrer Durchbiegbarkeit. Im Übrigen bilden sie einen lediglich einseitig offenen Profilraum mit nur einer offenen Längsseite, zu der - im Falle der Verwendung der Profile für Lichtleisten- die Beleuchtungsmittel ihre Hauptabstrahlrichtung haben können. Aufgrund der den offenen Profilraum seitlich begrenzen Schenkel, kann das U-Profil zum Schutz der Beleuchtungsmittel gut vergossen werden.

Bei der ersten Ausführungsvariante kann das Federelement, insbesondere die Blattfeder, an einer den geschlossenen Profilraum der zweiten Leiste begrenzenden Wand befestigt sein, wobei das Rastmittel in den geschlossenen Profilraum hineinragt. Vorzugsweise erfolgt dies dadurch, dass die Wand eine Öffnung, insbesondere eine Bohrung aufweist, durch die sich das Rastmittel bewegbar in den Profilraum hinein erstreckt. Das Einliegen des Rastmittels in der Öffnung verhindert, dass ein Ziehen an der ersten Leiste das Federelement abreißt. Denn durch das Ziehen der Leiste, zieht das Schwert, in dessen Vertiefung das Rastmittel einliegt, folgemäßig an dem Rastmittel. Würde das Rastmittel frei sein, würde die Zugkraft auf die Befestigung der Blattfeder übertragen und diese gegebenenfalls lösen. Die die Öffnung in Ziehrichtung begrenzenden Profilwand begrenzt die transversale Beweglichkeit des Rastmittels und nimmt die Zugkraft auf, so dass die Gefahr eines Abreißens der Blattfeder verhindert wird.

Wird ein U-förmiges Profil verwendet, kann der geschlossene Profilraum bevorzugt unter dem offenen Profilraum liegen. In der Ausführungsvariante des Entkupplungsmechanismusses mit einem Federelement kann die Wand, an der das Federelement befestigt ist, die Trennwand zwischen dem oberen, offenen Profilraum und dem unteren, geschlossenen Profilraum sein.

Der vorbeschriebene, erfindungsgemäße Entkupplungsmechanismus kann insbesondere bei Lichtleisten verwendet werden, bei der Beleuchtungsmittel, insbesondere eine Mehrzahl von Leuchtdioden, entlang der Längserstreckung ihres Profils in diesem angeordnet sind.

Weitere Merkmale, Vorteile und Wirkungen der Erfindung werden nachfolgend anhand eines konkreten Ausführungsbeispiels näher erläutert. Es zeigen:
- Fig. 1:: perspektivische Darstellung zweier verbundener Lichtleisten
- Fig. 2a:: Darstellung der ersten Lichtleiste mit Schwert
- Fig. 2b:: Darstellung der zweiten Lichtleiste mit Aufnahme für Schwert
- Fig. 2c:: Darstellung der zweiten Lichtleiste ohne Profil
- Fig. 3:: Darstellung der Lichtleisten im verriegelten Zustand mit entferntem Profil bei der zweiten Leiste
- Fig. 4:: Darstellung der Lichtleisten im entriegelten Zustand mit entferntem Profil bei der zweiten Leiste
- Fig. 5:: Querschnittsdarstellung des Profils der zweiten Leiste

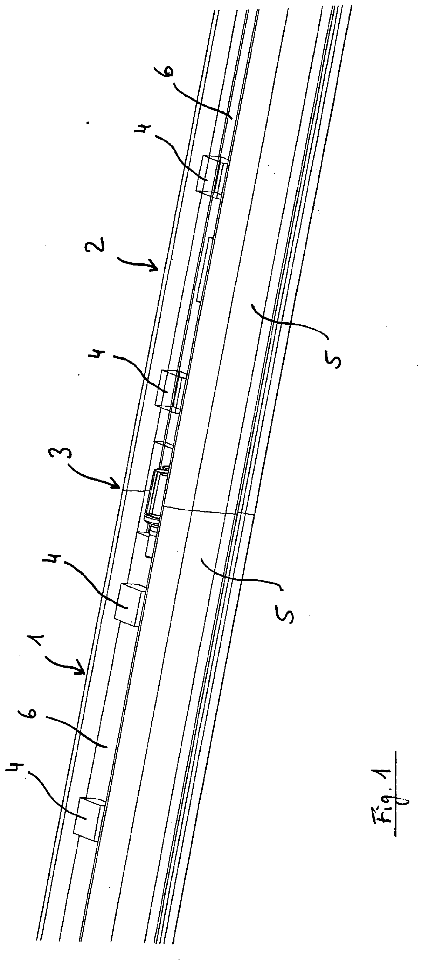

Figur 1 zeigt eine erste aus einem Profil 5 gebildete Leiste 1 und eine zweite aus einem identischen Profil 5 gebildete Leiste 2, die mittels eines Formschlusses miteinander lösbar verbunden sind. Die Profile 5 stoßen an mit ihren stirnseitigen Enden eine Trennebene 3 bildend bündig aneinander. Der Kupplungsmechanismus bzw. Entkupplungsmechanismus ist nicht sichtbar. Die beiden Leisten 1, 2 bilden Lichtleisten, in deren Profilen 5 eine Mehrzahl Beleuchtungsmittel 4 in Gestalt von Leuchtdioden 4 äquidistant zueinander beabstandet zueinander angeordnet sind. Die Leuchtdioden 4 sind auf einer Trägerplatine 6 montiert, insbesondere gelötet, von denen jeweils eine in jedem Profil 5 einliegt, insbesondere dort gehalten ist.

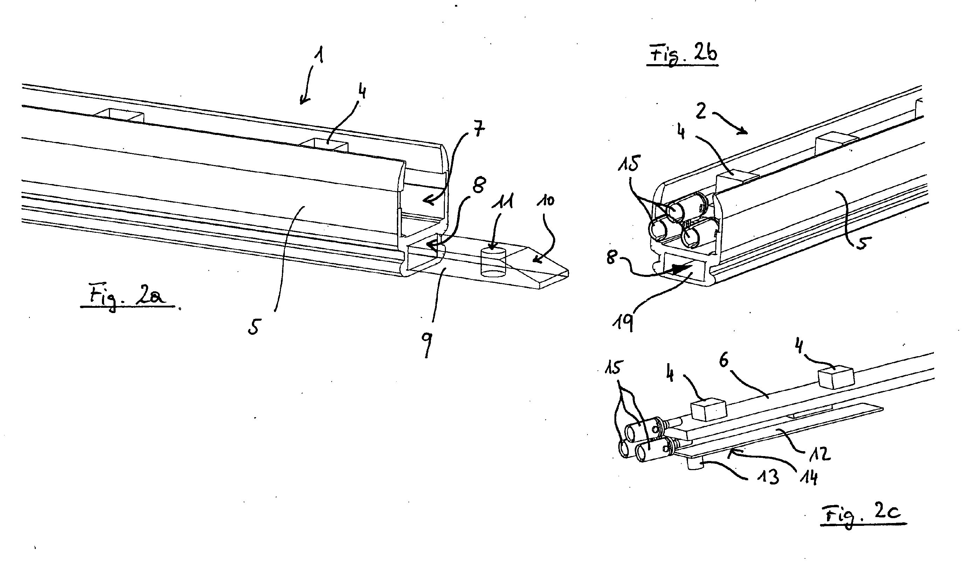

Wie in Figur 2a dargestellt ist, besitzt die erste Leiste 1 an einem axialen Stirnende ein abstehendes zungenförmiges Schwert 9. Das Schwert 9 ist in dieser Darstellung transparent dargestellt. Es liegt teilweise, d.h. etwa zur Hälfte, in einem geschlossenen Profilraum 8 ein, in dem es fixiert ist, beispielsweise eingeklebt oder durch äußere Krafteinwirkung auf das Profil 5 verklemmt ist. Das Schwert 9 besitzt eine Vertiefung 11 in Gestalt einer kreiszylindrischen Bohrung zur Aufnahme eines Rastmittels 13. Es hat an seinem abstehenden Ende oberseitig eine Abschrägung 10, um das Rastmittel 13 beim Verbinden der ersten mit der zweiten Leiste 2 anzuheben.

Figur 2b veranschaulicht die zweite Leiste 2. Sie besitzt eine Aufnahme 8, 19 zum Einschieben des Schwerts 9 der ersten Leiste 1. Die Aufnahme 8, 19 wird durch den geschlossenen Profilraum 8 des Profils 5 gebildet, der an der Stirnseite des axialen Endes des Profils 5 eine Öffnung 19 aufweist, durch die das Schwert 9 in den geschlossenen Profilraum 8 einführbar ist. Elektrische Steckbuchsen 15 zur Bestromung der Trägerplatine 6 respektive der Leuchtdioden 4 und zum Anschließen an korrespondierende Steckstifte der ersten Leiste 1 sind ebenfalls in Figur 2b dargestellt.

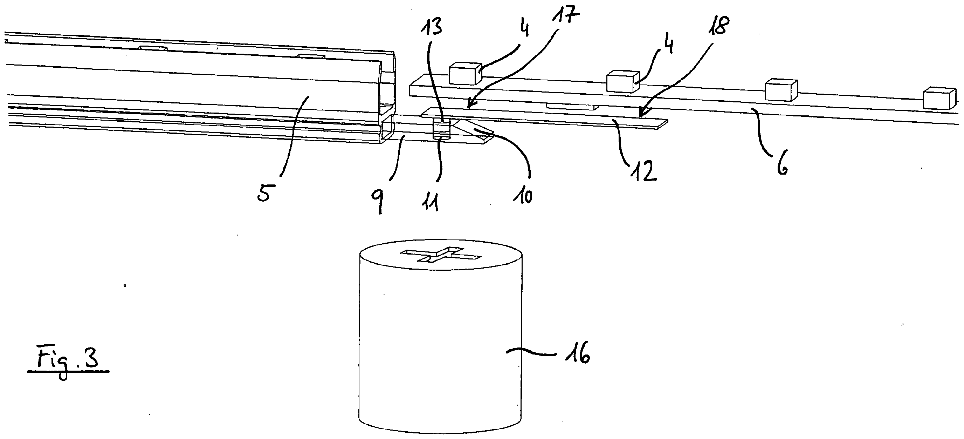

In Figur 2c ist die zweite Leiste 2 ohne ihr Profil 5 dargestellt. Sie weist ein Rastmittel 13 auf, das an einem federnden Ende 17 eines Federelements 12 auf seiner Unterseite 14 angeordnet ist. Hierdurch ist das Rastmittel 13 beweglich. Das Rastmittel 13 ist als Arretierungsbolzen ausgeführt, der im in die Aufnahme 8, 19 eingeschobenen Zustand des Schwerts 9 einen Formschluss 11, 13 mitbilden in der Vertiefung 11 des Schwerts verriegelnd einliegt. Das Federelement 12 ist als Blattfeder konzipiert. Das andere Ende 18 des Federelements 12 ist an dem nicht dargestellten Profil 5 befestigt. Figur 2c zeigt das Federelement 12 in seiner Neutralstellung. Wird das Schwert 9 in die Aufnahme 8, 19 eingeschoben, hebt die Abschrägung 10 das Rastmittel 13 entgegen der Federkraft des Federelements 12 an, bis es in die Vertiefung 11 hineinrutscht. Die beiden Leisten 1, 2 sind dann verriegelt. Dies ist in Fig. 3 dargestellt.

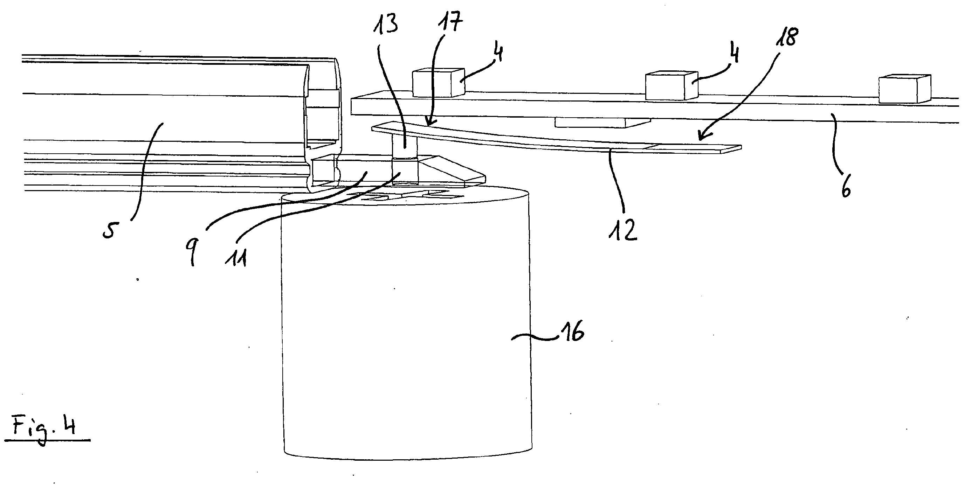

Die beiden Leisten 1, 2 werden somit mittels Formschluss zwischen dem Rastmittel 13 und dem Schwert 9, respektive seiner Vertiefung 11 miteinander gekuppelt. Damit diese Kupplung wieder lösbar ist, ist das Rastmittel 13 permanentmagnetisch ausgeführt, wobei die Magnetisierung des Rastmittels 13 in Richtung seiner Bewegbarkeit liegt. Dies bedeutet, dass ein magnetischer Pol auf der zur Platine 6 gerichteten Seite liegt und der andere Pol auf der zum Schwert 9 gerichteten Seite. Mittels eines externen permanentmagnetischen Entkupplungsmagneten 16 kann diese formschlüssige Verbindung gelöst werden, indem derjenige Pol des Entkupplungsmagneten 16 in das Magnetfeld des Rastmittels 13 gebracht wird, der seiner Polarität dem Pol des Rastmittels 13 entspricht, der zum Schwert 9 gerichtet ist. Da gleichgerichtete Pole sich abstoßen, wird das Rastmittel 13 entgegen der Kraft des Federelements 12 aus der Vertiefung 11 herausgedrückt und gibt das Schwert 9 somit frei. Dies ist in Figur 4 dargestellt. Die erste Leiste 1 kann nunmehr mit ihrem Schwert 9 aus der Aufnahme 8, 19 der zweiten Leiste 2 herausgezogen werden. Damit das Magnetfeld des externen Entkupplungsmagneten 16 ungehindert zum Rastmittel 13 durchdringen kann und damit das Rastmittel nicht an dem Schwert 9 magnetisch haftet, ist das Schwert 9 aus Edelstahl oder Messing hergestellt. Die Blattfeder 12 ist aus Edelstahl gefertigt.

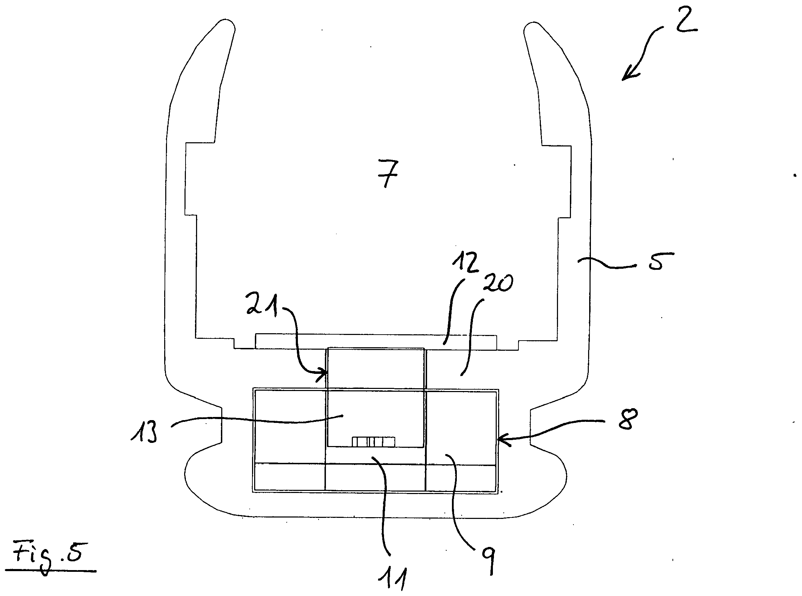

Ein Querschnitt des Profils 5 der zweiten Leiste ist in Figur 5 dargestellt. Das Profil 5 ist U-förmig und aus Aluminium hergestellt, so dass es nicht magnetisch ist. Die Profilbreite beträgt ca. 9mm, wobei jedoch auch andere Profilbreiten zwischen 5 und 20 mm verwendbar sind. Es besitzt einen zu einer Längsseite offenen Profilraum 7 und den darunter liegenden, geschlossenen Profilraum 8. Es ist erkennbar, dass der innere Querschnitt des geschlossenen Profilraums 8 geringfügig größer ist, als der äußere Querschnitt des Schwerts 9. Hinsichtlich der Form ist sowohl der Querschnitt des geschlossenen Profilraums 8 als auch der Querschnitt des Schwerts 9 rechteckig.

Der offene 7 und der geschlossene 8 Profilraum sind durch eine Trennwand 20 voneinander getrennt, in der eine Öffnung 21 vorgesehen ist. Durch diese Öffnung 21 erstreckt sich das Rastmittel 13 in den geschlossenen Profilraum bewegbar hinein, wobei es wie in Fig. 5 gezeigt etwa bis zur Hälfte in die Vertiefung 11 im Schwert 9 hineinreicht. Des Weiteren ist erkennbar, dass das Federelement 12 auf der zum offenen Profilraum 7 gerichteten Seite der Trennwand 20 aufliegt. Auf dieser Seite ist es auch befestigt. Das Einliegen des Rastmittels 13 in der Öffnung 21 verhindert, dass ein Ziehen an der ersten Leiste 1 das Federelement 12 abreißt. Die Blattfeder besitzt eine Länge von ca. 3cm und eine Breite von etwa 5mm. Seine Dicke liegt unter 1mm, insbesondere bei 0,5mm. Das Schwert besitzt eine Länge von 2cm, eine Breite von 5mm eine Dicke von 2mm.

Wie beschrieben, ist bei den beiden Leisten 1, 2 ein Kupplungsmechanismus durch Formschluss mit magnetischem Entkupplungsmechanismus realisiert, wobei der Formschluss 11, 13 durch ein bewegliches permanentmagnetisches Rastmittel 13 herstellbar ist bzw. hergestellt wird, das die Lösbarkeit des Formschlusses und damit der Kupplung der beiden Leisten 1, 2 ermöglicht. Beiden Leiste 1, 2 umfassen jeweils einen Teil des erfindungsgemäßen magnetischen Entkupplungsmechanismusses, sind aus einem Profil 5 gebildet und mittels eines Formschlusses 11, 13 mit der jeweils anderen Leiste 2, 1 lösbar verbindbar, wobei der Formschluss 11, 13 durch das bewegliche, permanentmagnetisches Rastmittel 13 herstellbar ist, dessen Magnetisierung in Richtung seiner Bewegbarkeit liegt, und wobei der Formschluss 11, 13 mittels eines externen Entkupplungsmagneten 16 lösbar ist.

## Patentansprüche

1. Anordnung umfassend eine erste aus einem Profil (5) gebildete Leiste (1) und eine an diese zu reihende zweite aus einem Profil (5) gebildete Leiste (2), wobei die erste und die zweite Leiste (1, 2) mittels eines magnetisch lösbaren Verriegelungsmechanismusses miteinander verbindbar sind, wobei die erste Leiste (1) an einem axialen Stirnende ein abstehendes Schwert (9) und die zweite Leiste (2) eine Aufnahme (8, 19) zum Einschieben des Schwerts (9) aufweist, wobei
- entweder das Schwert (9) eine Vertiefung (11) aufweist und die zweite; Leiste (2) ein Federelement (12) aufweist, das ein Rastmittel (13) trägt, welches im in die Aufnahme (8, 19) eingeschobenen Zustand des Schwerts (9) in der Vertiefung (11) verriegelnd einliegt, oder
- das Schwert (9) ein Rastmittel (13) trägt und die zweite Leiste (2) eine Vertiefung aufweist, wobei das Rastmittel (13) im in die Aufnahme (8, 19) eingeschobenen Zustand des Schwerts (9) federbelastet in der Vertiefung der zweiten Leiste (2) verriegelnd einliegt, und wobei das Rastmittel (13) permanentmagnetisch (13) ist, und dessen Magnetisierung in Richtung seiner Bewegbarkeit liegt, wobei die Verriegelung mittels eines externen Entkupplungsmagneten (16) lösbar ist.

2. Anordnung nach Anspruch 1, **dadurch gekennzeichnet, dass** das Federelement (12) eine Blattfeder ist, die an einem Ende (18) an dem Profil (5) der zweiten Leiste (2) gehalten ist und an ihrem gegenüberliegenden, federnden Ende (17) das Rastmittel (13) trägt.

3. Anordnung nach Anspruch 1, **dadurch gekennzeichnet, dass** das Federelement (12) durch einen streifenförmigen Steg gebildet ist, der sich beidseitig federnd an dem Profil (5) abstützt und etwa mittig das Rastmittel (13) trägt.

4. Anordnung nach einem der vorherigen Ansprüche, **dadurch gekennzeichnet, dass** das Schwert (9) an seiner zur zweiten Leiste (2) gerichteten Vorderseite eine Abschrägung (10) aufweist.

5. Anordnung nach einem der vorherigen Ansprüche, **dadurch gekennzeichnet, dass** das Rastmittel (13) ein Arretierungsbolzen ist.

6. Anordnung nach einem der vorherigen Ansprüche, **dadurch gekennzeichnet, dass** das Schwert (9) in einem geschlossenen Profilraum (8) des Profils (5) der ersten Leiste (1) fest eingesetzt ist.

7. Anordnung nach einem der vorherigen Ansprüche, **dadurch gekennzeichnet, dass** die Aufnahme (8, 19) des Profils (5) der zweiten Leiste (2) durch einen geschlossenen Profilraum (8) gebildet ist, in den das Schwert (9) einschiebbar ist.

8. Anordnung nach Anspruch 7, **dadurch gekennzeichnet, dass** das Federelement (12) an einer den Profilraum (8) der zweiten Leiste (2) begrenzenden Wand (20) befestigt ist, wobei sich das Rastmittel (13) in den Profilraum (8) hinein erstreckt.

9. Anordnung nach Anspruch 8, **dadurch gekennzeichnet, dass** die Wand (20) eine Öffnung (21) aufweist, durch die sich das Rastmittel (13) bewegbar in den Profilraum (8) hinein erstreckt.

10. Anordnung nach einem der vorherigen Ansprüche, **dadurch gekennzeichnet, dass** die erste und/ oder die zweite Leiste (1, 2) eine Lichtleiste ist, bei der Beleuchtungsmittel (4), insbesondere eine Mehrzahl von Leuchtdioden (4), entlang der Längserstreckung des Profils (5) in diesem angeordnet sind.

## Claims

1. Arrangement comprising a first strip (1) which is formed from a profile (5) and a second strip (2) which is formed from a profile (5) and which is to be arranged side by side with said first strip, wherein the first and the second strip (1, 2) can be connected to one another by means of a magnetically releasable locking mechanism, wherein the first strip (1) has a protruding blade (9) at one axial end, and the second strip (2) has a receptacle (8, 19) for inserting the blade (9), wherein either the blade (9) has a depression (11) and the second strip (2) has a spring element (12) which supports a latching means (13) which rests in a locking fashion in the depression (11) when the blade (9) is in the state in which it is inserted into the receptacle (8, 19), or
- the blade (9) supports a latching means (13) and the second strip (2) has a depression, wherein the latching means (13) rests in a spring-loaded locking fashion in the depression of the second strip (2) when the blade (9) is in the state in which it is inserted into the receptacle (8, 19),
and wherein the latching means (13) is permanently magnetic (13) and its magnetization is in the direction in which it can move, wherein the locking can be released by means of an external uncoupling magnet (16).

2. Arrangement according to Claim 1, **characterized in that** the spring element (12) is a leaf spring which is held at one end (18) on the profile (5) of the second strip (2), and supports the latching means (13) at its opposite, flexible end (17).

3. Arrangement according to Claim 1, **characterized in that** the spring element (12) is formed by a strip-shaped web which is supported flexibly on both sides on the profile (5) and supports the latching means (13) approximately in the centre.

4. Arrangement according to one of the preceding claims, **characterized in that** the blade (9) has a chamfer (10) on its front side directed towards the second strip (2).

5. Arrangement according to one of the preceding claims, **characterized in that** the latching means (13) is a locking bolt.

6. Arrangement according to one of the preceding claims, **characterized in that** the blade (9) is fixedly inserted into a closed profile space (8) of the profile (5) of the first strip (1).

7. Arrangement according to one of the preceding claims, **characterized in that** the receptacle (8, 19) of the profile (5) of the second strip (2) is formed by a closed profile space (8) into which the blade (9) can be inserted.

8. Arrangement according to Claim 7, **characterized in that** the spring element (12) is attached to a wall (20) which bounds the profile space (8) of the second strip (2), wherein the latching means (13) extends into the profile space (8).

9. Arrangement according to Claim 8, **characterized in that** the wall (20) has an opening (21) through which the latching means (13) extends into the profile space (8) in a movable fashion.

10. Arrangement according to one of the preceding claims, **characterized in that** the first and/or the second strip (1, 2) is a lighting strip in which lighting means (4), in particular a multiplicity of light-emitting diodes (4), are arranged in the profile (5), along the longitudinal extent thereof.

## Revendications

1. Dispositif comprenant une première barre (1) formé d'un profilé (5) et une seconde barre (2) formée d'un profilé (5) à aligner avec celle-ci, dans lequel la première et la seconde barres (1, 2) peuvent être assemblées l'une à l'autre au moyen d'un mécanisme de verrouillage à libération magnétique, dans lequel la première barre (1) présente un éperon saillant (9) à une extrémité frontale axiale et la seconde barre (2) présente un logement (8, 19) pour y insérer l'éperon (9), dans lequel soit l'éperon (9) présente un creux (11) et la seconde barre (2) présente un élément de ressort (12), qui porte un moyen d'encliquetage (13), qui dans l'état de l'éperon (9) introduit dans le logement (8, 19) se trouve verrouillé dans le creux (11), soit l'éperon (9) porte un moyen d'encliquetage (13) et la seconde barre (2) présente un creux, dans lequel le moyen d'encliquetage (13) dans l'état de l'éperon (9) introduit dans le logement (8, 19) se trouve verrouillé sous l'action d'un ressort dans le creux de la seconde barre (2), et dans lequel le moyen d'encliquetage (13) est à aimant permanent (13), et son aimantation est orientée dans la direction de sa mobilité, dans lequel le verrouillage peut être libéré au moyen d'un aimant de découplage externe (16).

2. Dispositif selon la revendication 1, **caractérisé en ce que** l'élément de ressort (12) est un ressort à lame, qui est maintenu à une extrémité (18) sur le profilé (5) de la seconde barre (2) et qui porte le moyen d'encliquetage (13) à son extrémité à ressort opposée (17) .

3. Dispositif selon la revendication 1, **caractérisé en ce que** l'élément de ressort (12) est formé par une aile en forme de bande, qui prend appui élastiquement de part et d'autre sur le profilé (5) et porte environ au milieu le moyen d'encliquetage (13).

4. Dispositif selon l'une quelconque des revendications précédentes, **caractérisé en ce que** l'éperon (9) présente un biseau (10) à son côté avant orienté vers la seconde barre (2).

5. Dispositif selon l'une quelconque des revendications précédentes, **caractérisé en ce que** le moyen d'encliquetage (13) est un boulon d'arrêt.

6. Dispositif selon l'une quelconque des revendications précédentes, **caractérisé en ce que** l'éperon (9) est fermement introduit dans une chambre de profilé fermée (8) du profilé (5) de la première barre (1) .

7. Dispositif selon l'une quelconque des revendications précédentes, **caractérisé en ce que** le logement (8, 19) du profilé (5) de la seconde barre (2) est formé par une chambre de profilé fermée (8), dans laquelle l'éperon (9) peut être inséré.

8. Dispositif selon la revendication 7, **caractérisé en ce que** l'élément de ressort (12) est fixé à une paroi (20) limitant la chambre de profilé (8) de la seconde barre (2), dans lequel le moyen d'encliquetage (13) s'étend à l'intérieur de la chambre de profilé (8).

9. Dispositif selon la revendication 8, **caractérisé en ce que** la paroi (20) présente une ouverture (21), à travers laquelle le moyen d'encliquetage (13) s'étend de façon mobile à l'intérieur de la chambre de profilé (8).

10. Dispositif selon l'une quelconque des revendications précédentes, **caractérisé en ce que** la première et/ou la seconde barre (1, 2) est une rampe lumineuse, dans laquelle des moyens d'éclairage (4), en particulier une multiplicité de diodes électroluminescentes (4), sont disposés dans ce profilé (5) le long de son extension longitudinale.
